# FASCICULE DE BREVET EUROPEEN

(11) **EP 1 793 910 B1**
(45) Date de publication et mention de la délivrance du brevet: **11.03.2020**
(21) Numéro de dépôt: 05798645.7
(22) Date de dépôt: 08.09.2005
(51) Int. Cl.: B01D 39/00, B01D 39/16, B01D 46/00

(54) **MEDIA FILTRANT POUR FILTRATION DE GAZ, DISPOSITIF DE FILTRATION ET PROCEDE DE FABRICATION DU MEDIA FILTRANT**
FILTERMEDIUM ZUR GASFILTRIERUNG, FILTERVORRICHTUNG UND VERFAHREN ZUR HERSTELLUNG DES FILTERMEDIUMS
FILTER MEDIUM FOR FILTRATION OF GASES, FILTRATION DEVICE AND METHOD FOR PRODUCTION OF FILTER MEDIUM

(30) Priorité: 29.09.2004 FR 0452193
(43) Date de publication de la demande: 13.06.2007
(73) Titulaire: Valeo Matériaux de Friction, 87020 Limoges (FR)
(72) Inventeur: SILVA, Manuel, F-14680 GOUVIX (FR); JACQUETTE, Maryse, F-61100 FLERS (FR); KLOSSEK, Robert, F-14700 FALAISE (FR)
(74) Mandataire: Metz, Gaëlle
(86) Numéro de dépôt international: PCT/FR2005/050722
(87) Numéro de publication internationale: WO 2006/035174

(56) Documents cités:
- EP-A- 0 593 814
- EP-A- 1 180 558
- EP-A1- 0 963 776
- WO-A-95/19828
- DE-U1- 29 916 949
- FR-A- 2 761 901
- US-A- 5 588 976
- US-B1- 6 200 368
- DATABASE WPI Section Ch, Week 198845 Derwent Publications Ltd., London, GB; Class A26, AN 1988-319374 XP002368321 & JP 63 236512 A (DAICEL CHEM IND LTD) 3 octobre 1988 (1988-10-03)
- DATABASE WPI Week 200334 Derwent Publications Ltd., London, GB; AN 2003-361390 XP002331873 & TW 496 755 A (J.NI) 1 août 2002 (2002-08-01)
- PATENT ABSTRACTS OF JAPAN vol. 18, no. 111, 23 février 1994 (1994-02-23) -& JP 05 305207 A (FUIRUTOREESHIYON KK), 19 novembre 1993 (1993-11-19)

## Description

La présente invention a pour objet un média filtrant destiné à la filtration de gaz tel que l'air pour l'aération et/ou le chauffage et/ou la climatisation de locaux ou de véhicules automobiles, ainsi qu'un dispositif de filtration comprenant ledit média.

L'invention a également pour objet un procédé de filtration mettant en œuvre ledit dispositif, ainsi qu'un procédé de fabrication du média filtrant.

Un média filtrant de l'état de la technique est constitué de fibres entremêlées de diamètre sensiblement constant.

Il peut être obtenu par cardage de fibres comme décrit dans le brevet FR 2 761 901, ou bien par filage d'un polymère thermoplastique à travers des buses.

En fonction des applications, l'homme du métier choisit le diamètre moyen des fibres qu'il souhaite utiliser pour fabriquer un média filtrant.

On caractérise usuellement le diamètre moyen d'un lot de fibres par son titrage (exprimé en décitex).

De manière générale, plus on souhaite obtenir de fortes efficacités de filtration, plus on choisira des fibres « fines », notamment dont le titrage est inférieur à 5 décitex. Il en résulte en général une capacité de colmatage peu élevée.

A l'inverse, quand on souhaite obtenir des média filtrants à capacité de colmatage élevée, on choisit des « grosses » fibres, notamment dont le titrage est supérieur à 5 décitex. Il en résulte cependant de faibles efficacités de filtration.

Le problème de ces solutions porte sur la difficulté d'obtenir des média filtrants présentant conjointement de fortes efficacités de filtration et de bonnes capacités de colmatage.

Le document DE 299 16 949 U1 décrit un média filtrant destiné à la filtration de gaz tel que l'air pour la climatisation de locaux comprenant un voile de fibre de polyester, constitué d'un mélange de deux populations de fibres de diamètre moyen différent, notamment de fibres dont le titrage est inférieur à 1.7 dtex et de fibres dont le titrage est supérieur à 10 dtex.

Le but de la présente invention est de remédier aux inconvénients ci-dessous. Par conséquent l'invention a pour but de réaliser un média filtrant avec une efficacité élevée et une bonne capacité de colmatage.

Ce but est atteint grâce à un média filtrant selon la revendication 1 destiné à la filtration de gaz tel que l'air pour l'aération et/ou le chauffage et/ou la climatisation de locaux ou de véhicules automobiles.

Les inventeurs ont pu constater que, de manière surprenante, un média filtrant selon l'invention permet d'obtenir simultanément des efficacités élevées et de bonnes capacités de colmatage.

Suivant d'autres caractéristiques du média filtrant selon l'invention :
chaque population de fibre a un titrage inférieur ou égal à 50 décitex (dtex), de préférence supérieur ou égal à 1 décitex.
le titrage de deux populations de fibre de diamètre moyen diffère d'un facteur supérieur ou égal à 1.5, de préférence supérieur ou égal à 1.6, voire supérieur ou égal à 2.
le mélange d'au moins deux populations de fibres de diamètre moyen différent est constitué de 10 à diamètre moyen, notamment sensiblement 50% de fibres du plus petit diamètre moyen.
   - les fibres du voile de fibre sont choisies de préférence parmi le groupe des fibres thermoplastiques telles que les fibres de polypropylène, de polyéthylène, de polyester, de polycarbonate, de polyamide, le groupe des fibres acryliques, des fibres acryliques préoxydées ; il est également possible de choisir les fibres du voile de fibres parmi le groupe des fibres aramides, parmi le groupe des fibres phénoliques, parmi le groupe des fibres fluorocarbonées, parmi le groupe des fibres minérales telles que les fibres de verre, parmi le groupe des fibres métalliques.
   - les fibres du voile de fibre sont des fibres longues et sont mélangées par une opération de cardage pour former un voile de carde.
   - les fibres du voile de fibre ont une longueur moyenne supérieure ou égale à 38mm et de préférence inférieure ou égale à 120mm.

L'invention porte également sur un dispositif de filtration plus particulièrement destiné à la filtration de gaz tel que l'air et destiné à l'aération et/ou au chauffage et/ou à la climatisation de locaux ou de véhicules automobiles qui comprend le média filtrant ci-dessus.

Le dispositif de filtration comprend un cadre, en général constitué de bandes de polymère souples ou rigides, auquel est fixé le média filtrant. Un dispositif de filtration usuel comprend le plus souvent deux ou quatre bandes parallèles deux à deux. Le média filtrant est généralement plissé en accordéon avant d'être fixé aux bandes de polymère.

L'invention concerne également un procédé de filtration de gaz tel que l'air où, on dispose dans une veine d'air, un dispositif de filtration selon l'invention, comprenant un voile de fibres d'au moins deux populations de diamètre moyen différent ainsi qu'un deuxième voile de fibres et des particules actives entre les deux voiles, de manière à ce que le flux d'air entrant traverse d'abord le voile de fibres constitué d'au moins deux populations de fibres de diamètre moyen différent.

L'invention concerne également un procédé de fabrication d'un média filtrant destiné à la filtration de gaz tel que l'air selon la revendication 10.

Selon un mode de réalisation, le procédé met en œuvre des fibres où le titrage de deux populations de diamètre moyen diffère d'un facteur supérieur ou égal à 1.5, de préférence supérieur ou égal à 1.6, voire supérieur ou égal à 2.

Selon une caractéristique avantageuse, le procédé comprend une étape ultérieure de liage hydraulique des fibres, notamment par jet d'eau, pour augmenter la consolidation mécanique du voile de carde.

Il peut également être avantageux d'ajouter une grille au cours de l'opération de cardage.

D'autres détails et caractéristiques avantageuses ressortent de la description ci-après de modes de réalisation préférés non limitatifs.

Trois filtres combinés ont été fabriqués avec des média filtrants, comprenant un voile de fibres supérieur, un voile de fibres inférieur et du charbon actif entre les deux voiles de fibres, selon l'art antérieur (Ex 1 et Ex 2) et selon l'invention (Ex 3), avec les caractéristiques suivantes :

| | Voile supérieur | | Charbon actif | Voile inférieur |
|---|---|---|---|---|
| | Fibres 2,8 dtex | Fibres 5,5 dtex | | |
| Ex 1 | 100% | 0% | 300 g/m² | 2,8 dtex |
| Ex 2 | 0% | 100% | 300 g/m² | 2,8 dtex |
| Ex 3 | 50% | 50% | 300 g/m² | 2,8 dtex |

Les fibres utilisées ont été cardées selon l'enseignement du brevet FR 2 761 901.

La masse surfacique des voiles supérieurs est de 38 g/m².

La masse surfacique des voiles inférieurs est de 40 g/m².

Les exemples 1 et 2 utilisent un média filtrant à une seule population de fibres à la différence de l'exemple 3, selon l'invention, où deux populations de fibres ont été mélangées.

Le charbon actif est maintenu entre les deux voiles par une colle.

Après plissage dans des conditions identiques, les trois média filtrants ont été fixés à deux bandes mousse de 5 mm en polypropylène de manière à obtenir des dispositifs de filtration de 206 mm de largeur, 208,5 mm de longueur et 30 mm de hauteur.

Les dispositifs de filtration ont été caractérisés dans les conditions définies par la norme ISO/TS 11155-1.

Le voile supérieur est placé en entrée du flux d'air. La poussière utilisée est de type SAE fine, dite ISOFINE, (A2 fine test dust - ISO 12103-1).

Le tableau suivant synthétise les résultats obtenus :

| Dispositif de filtration avec média filtrant | Perte de charge à 420 m³/h (Pa) | Capacité de colmatage moyenne à 180 m³/h (g) |
|---|---|---|
| Ex 1 | 146 | 19,7 |
| Ex 2 | 142 | 55,6 |
| Ex 3 | 152 | 48,9 |

Les mesures effectuées sur les trois exemples montrent que la perte de charge n'est pas significativement influencée par le type de fibre du média filtrant (on estime la dispersion des mesures de perte de charge à environ 10%).

On observe de manière connue que la capacité de colmatage d'un média filtrant de « grosses » fibres (Ex 2) est très supérieure à celle d'un média de fibres « fines » (Ex 1).

De manière surprenante la capacité de colmatage d'un média filtrant constitué d'un mélange de fibres « grosses » et « fines » (Ex 3) est voisine de celle d'un média filtrant de « grosses » fibres (Ex 2).

Afin de caractériser un filtre on mesure également la variation de l'efficacité moyenne (en %) en fonction du spectre particulaire (en micromètres), à différentes phases de la vie du filtre.

On détermine la pression Po en sortie d'un filtre neuf dans lequel on fait passer un débit d'air de 180 m³/h chargé de 75 mg/m³/h de poussière Isofine et on relève la variation d'efficacité au cours du temps, à débit d'air chargé constant pour des pressions caractéristiques, notamment Po + 125 Pa, Po + 250 Pa.

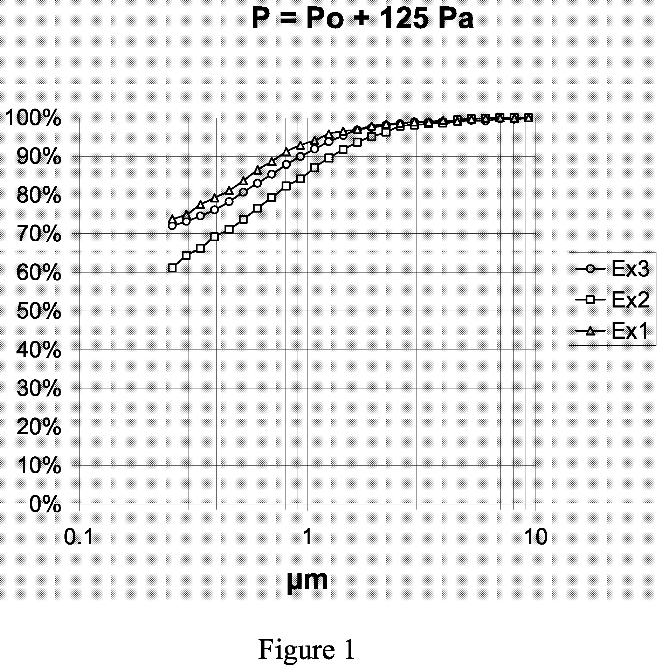

La figure 1 présente la variation d'efficacité moyenne en fonction du spectre particulaire pour les trois exemples Ex 1, Ex 2 et Ex 3 pour une pression Po + 125 Pa.

On note que, de manière usuelle l'efficacité moyenne d'un média de fibres « fines », (Ex 1), est très supérieure à celle d'un média à « grosses » fibres, (Ex 2) .

De manière surprenante on observe que le média filtrant selon l'invention, constitué d'un mélange de fibres « grosses » et « fines » (Ex 3) a une efficacité moyenne proche de celle d'un média de fibres « fines » (Ex 1) .

Ce comportement est observé pendant les différentes phases de la vie d'un filtre avec un média filtrant constitué d'un mélange de fibres ainsi que le démontre le tableau suivant. On porte, en fonction de la pression, la valeur de l'efficacité pour une valeur de taille de particules de 1 micromètre, représentative des poussières les plus abondantes à filtrer dans un véhicule.

| Dispositif de filtration | Efficacité moyenne à 1 µm | | |
|---|---|---|---|
| | P = Po | P = Po + 125 Pa | P = Po + 250 Pa |
| Ex 1 | 65% | 93% | 95% |
| Ex 2 | 50% | 85% | 88% |
| Ex 3 | 58% | 91% | 95% |

On obtient ainsi selon l'invention un média filtrant remarquable qui permet d'obtenir des dispositifs de filtration dont l'efficacité moyenne est élevée, tout en ayant également une capacité de colmatage élevée.

## Revendications

1. Média filtrant destiné à la filtration de gaz tel que l'air pour l'aération et/ou le chauffage et/ou la climatisation de locaux ou de véhicules automobiles comprenant au moins un voile de fibres, au moins un voile de fibres est constitué d'un mélange d'au moins deux populations de fibres de diamètre moyen différent,
le média comprend en outre un deuxième voile de fibres disposé parallèlement au voile de fibre constitué d'un mélange d'au moins deux populations de fibres de diamètre moyen différent, et des particules actives, notamment de charbon, disposées entre les deux voiles de fibres, **caractérisé en ce que** le titrage des fibres du deuxième voile est inférieur ou égal au plus petit titrage des fibres de voile de mélange de fibres.

2. Média filtrant selon la revendication précédente **caractérisé en ce que** chaque population de fibre a un titrage inférieur ou égal à 50 décitex (dtex), de préférence supérieur ou égal à 1 décitex.

3. Média filtrant selon l'une des revendications précédentes **caractérisé en ce que** le titrage de deux populations de fibre de diamètre moyen diffère d'un facteur supérieur ou égal à 1.5, de préférence supérieur ou égal à 1.6, voire supérieur ou égal à 2.

4. Média filtrant selon l'une des revendications précédentes **caractérisé en ce que** le mélange d'au moins deux populations de fibres de diamètre moyen différent est constitué de 10 à 90% de fibres du plus petit diamètre moyen, de préférence de 25 à 75% de fibres du plus petit diamètre moyen, notamment sensiblement 50% de fibres du plus petit diamètre moyen.

5. Média filtrant selon l'une des revendications précédentes **caractérisé en ce que** les fibres dudit voile de fibre sont choisies de préférence parmi le groupe des fibres thermoplastiques telles que les fibres de polypropylène, de polyéthylène, de polyester, de polycarbonate, de polyamide, le groupe des fibres acryliques, des fibres acryliques préoxydées, parmi le groupe des fibres aramides, parmi le groupe des fibres phénoliques, parmi le groupe des fibres fluorocarbonées, parmi le groupe des fibres minérales telles que les fibres de verre, parmi le groupe des fibres métalliques.

6. Média filtrant selon l'une des revendications précédentes **caractérisé en ce que** les fibres dudit voile de fibre sont des fibres longues et sont mélangées par une opération de cardage pour former un voile de carde.

7. Média filtrant selon la revendication 6 **caractérisé en ce que** les fibres du voile de fibre ont une longueur moyenne supérieure ou égale à 38mm et de préférence inférieure ou égale à 120mm.

8. Dispositif de filtration plus particulièrement destiné à la filtration de gaz tel que l'air et destiné à l'aération et/ou au chauffage et/ou à la climatisation de locaux ou de véhicules automobiles **caractérisé en ce que** ledit dispositif comprend un média filtrant selon l'une des revendications 1 à 7.

9. Procédé de filtration de gaz tel que l'air **caractérisé en ce que** on introduit le dispositif de filtration selon la revendication 8 comprenant un média filtrant selon l'une des revendications 1 à 7 dans une veine d'air et **en ce que** le voile de fibre constitué d'un mélange d'au moins deux populations de fibres de diamètre moyen différent dudit dispositif de filtration est disposé en entrée de flux d'air.

10. Procédé de fabrication d'un média filtrant selon l'une quelconque des revendications 1 à 7 destiné à la filtration de gaz tel que l'air comprenant au moins les étapes successives suivantes :
- on approvisionne des fibres constituées de au moins deux populations de fibres de diamètre moyen différents, et dont le titrage est inférieur ou égal à 50 décitex, et de préférence supérieur ou égal à 1 décitex,
- on mélange les fibres approvisionnées,
- on introduit le mélange dans un dispositif de cardage,
- on procède à une opération de cardage pour former un voile de carde
- ledit procédé comprenant une étape ultérieure de mise en forme, notamment de calandrage ou de laminage, au cours de laquelle on introduit ledit voile de carde et un deuxième voile dans un dispositif de mise en forme permettant de réunir les deux voiles, et où on insère des particules actives, notamment du charbon, entre les deux voiles, notamment pendant une opération de calandrage ou de laminage.

11. Procédé selon la revendication précédente **caractérisé en ce que** le titrage de deux populations de diamètre moyen diffère d'un facteur supérieur ou égal à 1.5, de préférence supérieur ou égal à 1.6, voire supérieur ou égal à 2.

12. Procédé selon l'une des revendications 10 ou 11 **caractérisé en ce que** ledit procédé comprend une étape ultérieure de liage hydraulique des fibres, notamment par jet d'eau, pour augmenter la consolidation mécanique du voile de carde.

13. Procédé selon l'une des revendications 10 à 12 **caractérisé en ce que** on ajoute une grille au cours de l'opération de cardage.

## Patentansprüche

1. Filtermedium zur Filtrierung von Gas wie Luft zur Belüftung und/oder Erwärmung und/oder Klimatisierung von Räumen oder Kraftfahrzeugen, das mindestens ein Faserflor umfasst, wobei mindestens ein Faserflor aus einer Mischung aus mindestens zwei Gruppen von Fasern mit unterschiedlichem mittleren Durchmesser besteht, wobei das Medium ferner einen zweiten Faserflor umfasst, der parallel zum Faserflor angeordnet ist, der aus einer Mischung aus mindestens zwei Gruppen von Fasern mit unterschiedlichem mittleren Durchmesser besteht, sowie aktiven Teilchen, insbesondere Kohle, die zwischen den beiden Faserfloren angeordnet sind, **dadurch gekennzeichnet, dass** der Fasertiter des zweiten Faserflors kleiner gleich dem kleinsten Titer der Fasern des Fasermischungsflors ist.

2. Filtermedium nach dem vorhergehenden Anspruch, **dadurch gekennzeichnet, dass** jede Fasergruppe einen Titer kleiner gleich 50 Dezitex (dtex), vorzugsweise größer gleich 1 Dezitex aufweist.

3. Filtermedium nach einem der vorhergehenden Ansprüche, **dadurch gekennzeichnet, dass** sich der Titer von zwei Gruppen von Fasern mit mittlerem Durchmesser um einen Faktor größer gleich 1,5, vorzugsweise größer gleich 1,6 und sogar größer gleich 2 unterscheidet.

4. Filtermedium nach einem der vorhergehenden Ansprüche, **dadurch gekennzeichnet, dass** die Mischung aus mindestens zwei Gruppen von Fasern mit unterschiedlichem mittleren Durchmesser aus 10 bis 90% Fasern mit dem kleinsten mittleren Durchmesser, vorzugsweise 25 bis 75% Fasern mit dem kleinsten mittleren Durchmesser, insbesondere im Wesentlichen 50% Fasern mit dem kleinsten mittleren Durchmesser besteht.

5. Filtermedium nach einem der vorhergehenden Ansprüche, **dadurch gekennzeichnet, dass** die Fasern des Faserflors vorzugsweise aus der Gruppe der thermoplastischen Fasern wie Polypropylen-, Polyethylen-, Polyester-, Polycarbonat-, Polyamidfasern, der Gruppe der Acrylfasern, der voroxidierten Acrylfasern, aus der Gruppe der Aramidfasern, aus der Gruppe der Phenolfasern, aus der Gruppe der Fluorcarbonfasern, aus der Gruppe der Mineralfasern wie Glasfasern, aus der Gruppe der Metallfasern ausgewählt sind.

6. Filtermedium nach einem der vorhergehenden Ansprüche, **dadurch gekennzeichnet, dass** die Fasern des Faserflors Langfasern sind und mittels eines Kardiervorgangs zur Ausbildung eines Kardenflors vermischt sind.

7. Filtermedium nach Anspruch 6, **dadurch gekennzeichnet, dass** die Fasern des Faserflors eine mittlere Länge von größer gleich 38 mm und vorzugsweise kleiner gleich 120 mm aufweisen.

8. Vorrichtung zur Filtrierung, insbesondere zur Filtrierung von Gas wie Luft und zur Belüftung und/oder Erwärmung und/oder Klimatisierung von Räumen oder Kraftfahrzeugen, **dadurch gekennzeichnet, dass** die Vorrichtung ein Filtermedium nach einem der Ansprüche 1 bis 7 umfasst.

9. Vorrichtung zur Filtrierung von Gas wie Luft, **dadurch gekennzeichnet, dass** die Filtrierungsvorrichtung nach Anspruch 8, die ein Filtermedium nach einem der Ansprüche 1 bis 7 umfasst, in einen Luftstrom eingebracht wird, und dadurch, dass der Faserflor der Filtrierungsvorrichtung, der aus einer Mischung aus mindestens zwei Gruppen von Fasern mit unterschiedlichem mittleren Durchmesser besteht, am Luftströmungseinlass angeordnet ist.

10. Verfahren zur Herstellung eines Filtermediums nach einem der Ansprüche 1 bis 7 zur Filtrierung von Gas wie Luft, das zumindest die folgenden aufeinanderfolgenden Schritte umfasst:
- Bereitstellen von Fasern, die aus mindestens zwei Gruppen von Fasern mit unterschiedlichem mittleren Durchmesser bestehen und deren Titer kleiner gleich 50 Dezitex und vorzugsweise größer gleich 1 Dezitex beträgt,
- Mischen der bereitgestellten Fasern,
- Einbringen der Mischung in eine Kardiervorrichtung,
- Durchführen eines Kardiervorgangs zum Ausbilden eines Kardenflors,
- wobei das Verfahren einen späteren Schritt der Formgebung, insbesondere des Kalandrierens oder Laminierens, umfasst, während dessen der Kardenflor und ein zweiter Flor in eine Formgebungsvorrichtung eingelegt werden, wodurch sich die beiden Flore vereinen lassen und wobei aktive Teilchen, insbesondere Kohle, zwischen die beiden Flore eingebracht werden, insbesondere während eines Kalandrier- oder Laminiervorgangs.

11. Verfahren nach dem vorhergehenden Anspruch, **dadurch gekennzeichnet, dass** sich der Titer von zwei Gruppen mit mittlerem Durchmesser um einen Faktor größer gleich 1,5, vorzugsweise größer gleich 1,6 und sogar größer gleich 2 unterscheidet.

12. Verfahren nach einem der Ansprüche 10 oder 11, **dadurch gekennzeichnet, dass** das Verfahren einen späteren Schritt des hydraulischen Verfestigens der Fasern, insbesondere mit einem Wasserstrahl, zum Erhöhen der mechanischen Verfestigung des Kardenflors umfasst.

13. Verfahren nach einem der Ansprüche 10 bis 12, **dadurch gekennzeichnet, dass** während des Kardiervorgangs ein Gitter ergänzt wird.

## Claims

1. Filter media intended for filtering gases such as air for the aeration and/or the heating and/or the air conditioning of premises or of motor vehicles, comprising at least one web of fibres, at least one web of fibres consists of a mixture of at least two populations of fibres of different mean diameter,
the media further comprises a second web of fibres positioned parallel to the fibre web consisting of a mixture of at least two populations of fibres of different mean diameter, and active particles, in particular of charcoal, positioned between the two webs of fibres, **characterized in that** the count of the fibres of the second web is less than or equal to the smallest count of the fibres of the web of mixture of fibres.

2. Filter media according to the preceding claim, **characterized in that** each fibre population has a count less than or equal to 50 decitex (dtex), preferably greater than or equal to 1 decitex.

3. Filter media according to either of the preceding claims, **characterized in that** the count of two fibre populations of mean diameter differs by a factor greater than or equal to 1.5, preferably greater than or equal to 1.6, or even greater than or equal to 2.

4. Filter media according to either of the preceding claims, **characterized in that** the mixture of at least two populations of fibres of different mean diameter consists of 10% to 90% of fibres of the smallest mean diameter, preferably of 25% to 75% of fibres of the smallest mean diameter, in particular substantially 50% of fibres of the smallest mean diameter.

5. Filter media according to one of the preceding claims, **characterized in that** the fibres of said web of fibres are preferably chosen from the group of thermoplastic fibres such as polypropylene, polyethylene, polyester, polycarbonate or polyamide fibres, the group of acrylic fibres or preoxidized acrylic fibres, from the group of aramid fibres, from the group of phenolic fibres, from the group of fluorocarbon fibres, from the group of mineral fibres such as glass fibres, or from the group of metal fibres.

6. Filter media according to one of the preceding claims, **characterized in that** the fibres of said fibre web are long fibres and are mixed by a carding operation in order to form a card web.

7. Filter media according to Claim 6, **characterized in that** the fibres of the fibre web have a mean length greater than or equal to 38 mm and preferably less than or equal to 120 mm.

8. Filtration device more particularly intended for the filtration of gases such as air and intended for the aeration and/or the heating and/or the air conditioning of premises or motor vehicles, **characterized in that** said device comprises a filter media according to one of Claims 1 to 7.

9. Process for filtering gases such as air, **characterized in that** the filtration device according to Claim 8 comprising a filter media according to one of Claims 1 to 7 is introduced into a stream of air and **in that** the fibre web consisting of a mixture of at least two populations of fibres of different mean diameter of said filtration device is positioned at the airflow intake.

10. Process for manufacturing a filter media according to any one of Claims 1 to 7 intended for the filtration of gases such as air comprising at least the following successive steps:
- fibres consisting of at least two populations of fibres of different mean diameters, and the count of which is less than or equal to 50 decitex, and preferably greater than or equal to 1 decitex, are provided,
- the fibres provided are mixed,
- the mixture is introduced into a carding device,
- a carding operation is carried out in order to form a card web and
- said process comprising a subsequent step of shaping, in particular of calendering or of laminating, during which said card web and a second web are introduced into a shaping device that makes it possible to combine the two webs, and where active particles, in particular of charcoal, are inserted between the two webs, in particular during a calendering or laminating operation.

11. Process according to the preceding claim, **characterized in that** the count of two populations of mean diameter differs by a factor greater than or equal to 1.5, preferably greater than or equal to 1.6, or even greater than or equal to 2.

12. Process according to either of Claims 10 and 11, **characterized in that** said process comprises a subsequent step of hydraulic binding of the fibres, in particular by a water jet, in order to increase the mechanical consolidation of the card web.

13. Process according to one of Claims 10 to 12, **characterized in that** a grid is added during the carding operation.
